# EUROPÄISCHE PATENTSCHRIFT

(11) **EP 1 251 987 B1**
(45) Veröffentlichungstag und Bekanntmachung des Hinweises auf die Patenterteilung: **25.06.2003**
(21) Anmeldenummer: 00967798.0
(22) Anmeldetag: 27.09.2000
(51) Int. Cl.: B22F 3/22, B22F 7/00

(54) **VERFAHREN ZUR HERSTELLUNG EINER DÜNNEN PORÖSEN SCHICHT MIT OFFENER POROSITÄT**
METHOD FOR THE PRODUCTION OF A THIN POROUS LAYER WITH OPEN POROSITY
PROCEDE DE FABRICATION D'UNE COUCHE FINE ET POREUSE A POROSITE OUVERTE

(30) Priorität: 29.12.1999 DE 19963698
(43) Veröffentlichungstag der Anmeldung: 30.10.2002
(73) Patentinhaber: GKN Sinter Metals GmbH, 42477 Radevormwald (DE)
(72) Erfinder: KUHSTOSS, Andreas, 42899 Remscheid (DE); RÖTHIG, Thomas, 58332 Schwelm (DE); NEUMANN, Peter, 58706 Menden (DE)
(74) Vertreter: Patentanwälte Maxton & Langmaack
(86) Internationale Anmeldenummer: EP0009422
(87) Internationale Veröffentlichungsnummer: WO01049440

(56) Entgegenhaltungen:
- EP-A- 0 864 389
- WO-A-99/54524
- US-A- 5 592 686

## Beschreibung

Die Erfindung betrifft ein Verfahren zur Herstellung einer dünnen porösen Schicht mit offener Porosität, hergestellt aus einem Gemisch umfassend sinterfähiges Pulver.

In der Technik werden für die vielfältigsten Anwendungszwecke poröse Körper benötigt, die von einem strömenden Medium durchströmt werden, wobei entweder reaktive Vorgänge unterstützt werden sollen oder aber im strömungsfähigen Medium enthaltene Feststoffteilchen zurückgehalten, d. h. ausgefiltert werden sollen. Filterkörper aus keramischem Material müssen im allgemeinen wegen der Bruchgefahr relativ dick ausgebildet werden. Der Verwendung von Kunststoffen als Filtermaterial sind üblicherweise Grenzen gesetzt durch die geringe Festigkeit und die geringe Temperaturbeständigkeit. Eine Verwendung von metallischen Werkstoffen als poröse Schicht ist bekannt in Form von aus Metallfasern hergestellten Geweben oder Vliesen. Auch Filterkörper aus gepreßten und gesinterten Metallpulvern sind aus herstellungstechnischen Gründen verhältnismäßig dick. Wesentlicher Grund dafür, daß derartige Filterkörper relativ dick ausgebildet werden müssen, ist, daß diese die notwendige Festigkeit, insbesondere im Hinblick auf die Werte der Zug- und Scherfestigkeit, nicht aufweisen. Wegen der nicht zu vermindernden Dicke treten, besonders bei feinporigem Material, entsprechend große Strömungswiderstände auf.

Bei einer derartigen, von einem Medium durchströmten porösen Schicht besteht unabhängig vom verwendeten Material das Bedürfnis, unerwünschte Strömungswiderstände zu minimieren, so daß möglichst dünne Schichtdicken anzustreben sind, sowie diesen Schichten eine ausreichende Festigkeit zu geben. Aus metallischem Gewebe oder Vlies lassen sich zwar entsprechend dünne Schichten, beispielsweise in einer Dicke von etwa 100µm, herstellen. Diese sind jedoch wenig fest, weisen verhältnismäßig große Poren und hinsichtlich der Porosität große Toleranzen auf. Da zur Herstellung derartiger Gewebe und Vliese entsprechend dünne und daher auch teure Drähte verwendet werden müssen, sind die hieraus hergestellten Gewebe und Vliese entsprechend teuer.

Aus EP 0 525 325 B1 ist ein Verfahren zum Herstellen von porösen, metallischen Sinterwerkstücken bekannt, bei dem zunächst ein Metallpulver in einer Trägerflüssigkeit suspendiert wird, die aus einem in einem Lösemittel aufgelösten Bindemittel besteht und die so eingestellt ist, daß die Suspension gießfähig ist. Diese Suspension wird in eine Form gegossen. Anschließend wird das Lösemittel abgedampft, so daß durch das verbleibende Bindemittel das Metallpulver in der durch die Form vorgegebenen Geometrie verfestigt wird und einen handhabbaren Grünkörper bildet. Nach dem Trennen aus der Form wird der Grünkörper in üblicher Weise gesintert. Dieses vorbekannte Verfahren ist vorzugsweise zur Herstellung von verhältnismäßig dickwandigen Sinterteilen vorgesehen, die sich aufgrund ihrer Geometrie besser durch einen Gießvorgang als im herkömmlichen Verfahren durch ein Pressen eines Metallpulvers in eine Form herstellen lassen. Dünnschichtige, offene, poröse Teile lassen sich mit diesem Verfahren nicht herstellen. Mittels dieses Verfahrens hergestellte dünne Schichten sind brüchig, sie weisen keine ausreichenden Festigkeiten auf.

WO-9954524 offenbart ein Verfahren zur Herstellung einer dünnen pörosen Schicht mit einer Dicke, die mindestens etwa dem dreifachen mittleren Durchmesser der eingesetaten Pulverpartikel entspricht. Mittel zum kontrollieren der Porengröße werden auch beschrieben.

Der Erfindung liegt nun die Aufgabe zugrunde, ein Verfahren zur Herstellung einer dünnen porösen Schicht zu schaffen, die eine definierte Porosität und ausreichende Festigkeit aufweist.

Diese Aufgabe wird gelöst durch ein Verfahren zur Herstellung einer dünnen porösen Schicht mit offener Porosität, hergestellt aus einem Gemisch umfassend ein sinterfähiges Pulver mit einer vorgebbaren Größenverteilung der Pulverpartikel, wobei die gesinterte Schicht eine Dicke, die mindestens etwa dem dreifachen mittleren Durchmesser der eingesetzten Pulverpartikel entspricht, wobei vorzugsweise die Dicke in einem Bereich von etwa dem 3- bis 25-fachen, weiter bevorzugt dem 3- bis 10-fachen des Durchmessers der Pulverpartikel liegt, einen definierten Porendurchmesser in einem Bereich von etwa 0,01 bis 50µm und eine Zugfestigkeit in einem Bereich von etwa 5 bis 500 N/mm², bevorzugt 20 bis 400 N/mm², weiter bevorzugt 50 bis 300 N/mm², gemessen in Anlehnung an DIN EN 10002, aufweist, wobei das sinterfähige Pulver mit einer vorgegebenen Größenverteilung der Pulverpartikel zusammen mit Partikeln vorgegebener Größe als Porenbildner in einer Trägerflüssigkeit suspendiert wird, die in wenigstens einer Schicht auf den Trägerkörper aufgebracht, getrocknet und die so gebildete Grünschicht gesintert wird. Beim Sintern einer aus einem sinterfähigen Pulver, vorzugsweise einem Metallpulver, gebildeten Grünschicht verbinden sich die einzelnen Pulverteilchen fest miteinander, wobei zwischen den Pulverteilchen Freiräume verbleiben, die in bezug auf die Dicke der gesinterten Schicht eine offene Porosität ergeben, so daß die Schicht für strömende Medien durchlässig wird.

Unter sinterfähigen Pulvern im Sinne der Erfindung werden Pulver verstanden, hergestellt aus Metallen, Metalloxyden, Keramiken und/oder Kunststoffen. Verwendbare metallische Pulver im Sinne der Erfindung sind nicht nur Pulver aus reinen Metallen, sondern auch Pulver aus Metallegierungen und/oder Pulvermischungen aus unterschiedlichen Metallen und Metallegierungen zu verstehen. Dazu gehören insbesondere Stähle, vorzugsweise Chrom-Nickel-Stähle, Bronzen, Nickelbasislegierungen wie Hastalloy, Inconel oder dergleichen, wobei Pulvermischungen auch hochschmelzende Bestandteile enthalten können, wie beispielsweise Platin oder dergleichen. Das verwendete Metallpulver und seine Teilchengröße ist vom jeweiligen Einsatzzweck abhängig. Bevorzugte Pulver sind die Legierungen 316 L, 304 L, Inconel 600, Inconel 625, Monel und Hastalloy B, X und C.

Durch das genannte Verhältnis zwischen der Schichtdicke und dem Partikeldurchmesser ist sichergestellt, daß immer mehrere Lagen von Partikeln übereinander angeordnet sind und durchgehende Löcher, die größer als der gewünschte Porendurchmesser sind, vermieden werden. Durchgehende Löcher können hierdurch vermieden werden. Die Korngröße und damit der Durchmesser der einsetzbaren Pulverpartikel liegt in einem Bereich von 0,05µm bis 150µm, vorzugsweise in einem Bereich von etwa 0,5µm bis 100µm, noch mehr bevorzugt in einem Bereich von 0,5 µm bis 6µm.

Hierdurch werden vorteilhafterweise Inhomogenitäten und Hohlräume in der dünnen porösen Schicht vermieden. Es ist also möglich, die Größe der Porosität bis zu einem gewissen Grad über die Teilchengröße des eingesetzten sinterfähigen Pulvers zu beeinflussen.

Vorzugsweise beträgt die Dicke der Schicht maximal etwa 500 µm, bevorzugt liegt sie in einem Bereich von etwa 5 bis 300µm, noch mehr bevorzugt 5 bis 18µm. Derart dünne Schichten mit ausreichender Festigkeit waren bislang nicht herstellbar. Die Schicht weist vorteilhafter Weise sowohl ausgesprochen geringe Strömungswiderstände bei Durchströmung derselben mit flüssigen oder gasförmigen Medien als auch eine dabei ausreichend hohe Festigkeit bzw. Steifheit auf. Es kann vorgesehen sein, die Schicht ohne einen Trägerkörper als Folien oder Membran einzusetzen oder aber fest mit einem Trägerkörper zu verbinden. Die Schicht paßt sich vorteilhafterweise aufgrund ihrer noch vorhandenen Flexibilität auch einer unebenen, beispielsweise gekrümmten Auflage hervorragend an.

Die dünne poröse Schicht ist bevorzugt selbsttragend. Selbsttragend im Sinne der Erfindung bedeutet, daß die Schicht ohne jeglichen Trägerkörper verwendet werden kann und dabei nicht bricht oder brüchig wird. So ist es beispielsweise möglich, Folienblätter herzustellen und diese in mehreren Schichten übereinandergelegt und gegebenenfalls auf die Anwendungsbedürfnisse zugeschnitten zu verwenden. Durch die selbsttragenden Eigenschaften der Folie ist es vorteilhafterweise möglich, Schichten als Filter- bzw. Katalysatormaterialien dort einzusetzen, wo bisher beispielsweise papierähnliche Materialien verwendet wurden. Denn die dünnen porösen Schichten aus sinterfähigen Pulvern sind bekannten Schichten aus Papier bzw. papierähnlichen Materialien für ähnliche Anwendungen insoweit überlegen, als sie deutlich höhere Standzeiten, bessere Rückspüleigenschaften und einen erweiterten Anwendungsbereich, insbesondere im Hinblick auf die möglichen Temperaturen und pH-Werte, aufweisen.

Bevorzugt liegt der Bubbel-Point Druck der erfindungsgemäßen Schicht in einem Bereich von etwa 8 x 10⁶ bis 2 x 10³ Pa, besonders bevorzugt in einem Bereich von etwa 8,6 x 10⁶ bis 1,7 2 x 10³ Pa, ermittelt nach DIN 30911.

Das Gemisch, aus welchem die dünne poröse Schicht hergestellt ist, umfaßt anorganische und/oder organische Porenbildner. Hierzu eignen sich insbesondere Harnstoffe, die in kristalliner Form und damit in definierten Teilchengrößen vorliegen. Jedoch ist es auch möglich, Ammoniumcarbonat sowie andere anorganische Salze zu verwenden. Als organische Porenbildner kommen insbesondere Styropor, Saccharose, Gelatinen und Tapetenkleister in Frage. Aber auch bereits im Stand der Technik bekannte Bindemittel oder Wachse, die insbesondere als Hilfsstoffe zur Verringerung der Reibung in den jeweiligen Werkzeugen in der Pulvermetallurgie verwendet werden, können Verwendung finden. Diese Bindemittel und Wachse werden jedoch nicht in den üblich niedrigen Konzentrationen verwendet, sondern sind in dem Gemisch zur Herstellung der dünnen porösen Schicht in einem Anteil von mindestens etwa 5 Vol.-%, vorzugsweise mehr als 12 Vol.-% vorhanden. Die Porenbildner können sowohl in definierter Partikelform und -größe vorliegen als auch als Lösung bzw. gelöst in einem zu verwendeten Lösemittel. Bevorzugt liegen die Porenbildner jedoch in definierter Partikelform und -größe vor.

Die Porenbildner lassen sich in zwei unterschiedliche Gruppen aufteilen, nämlich einerseits in eine Gruppe derjenigen Porenbildner, die dem zu sinternden Gemisch als Platzhalter für die späteren Feinstporen dienen. Die andere Gruppe bilden diejenigen Porenbildner, welche als Füllstoff benutzt werden, üblicherweise um eine hohe Porosität zu erzielen. Im erstgenannten Fall, in welchem die Porenbildner als Platzhalter fungieren, werden die Porenbildner in einer Partikelgröße (Korngröße) verwendet, welche etwa in dem Größenbereich liegt, den die in der dünnen porösen Schicht beinhalteten Feinstporen aufweisen sollen. Ist zum Beispiel Ziel, Feinstporen in einem Bereich von 1µm zu erzielen, so dürfen die Porenbildner nicht wesentlich über bzw. unter 1µm groß sein. Hierdurch wird sichergestellt, daß trotz des beim Sintern des Gemisches zu der dünnen porösen Schicht auftretenden Schrumpfvorganges, der jedoch eingerechnet werden kann, die gewünschten Porengrößen erreicht werden. Die Verwendung von Porenbildnern als Füllstoff ist insbesondere dann empfehlenswert, wenn erfindungsgemäße dünne poröse Schichten mit niedrigen Dichten und einem extrem hohen Durchfluß erhalten werden sollen. Gemäß der Erfindung ist es auch möglich, als Porenbildner Gemische, insbesondere der vorgenannten Substanzen, auch unterschiedlicher Dichte und/oder Größe zu verwenden. Insbesondere sind auch Kombinationen von Porenbildnern im Gemisch gemäß der Erfindung vorgesehen, in welchem die Porenbildner sowohl als Platzhalter als auch als Füllstoff dienen.

Das in dem Gemisch enthaltene sinterfähige Pulver besteht aus kugelförmigen und/oder spratzigen Partikeln. Bei der Verwendung von kugelförmigen Pulverteilchen ist eine gleichmäßige Verteilung des sinterbaren Pulvers sowie der gegebenenfalls weiterhin in dem Gemisch vorhandenen Substanzen, insbesondere Porenbildnern, gewährleistet, daß Verhakungen der sinterfähigen Pulverpartikel nicht gegeben sind. Spratzige sinterfähige Pulver ermöglichen andererseits, erfindungsgemäße Schichten niedriger Dichte und mit relativ großen Poren zu erhalten bei gleichzeitiger hoher Festigkeit, da diese spratzigen Partikel mehr und damit festere Bindungen zu benachbarten spratzigen Partikeln ausbilden als dies der Fall bei Verwendung von kugelförmigen Partikeln ist. Es ist vorgesehen, daß das sinterfähige Pulver zumindest teilweise aus Kurzfasern besteht. Hier kommen vorzugsweise Metallfasern in Betracht, die mit Durchmessern zwischen 0,1 und 250µm, bevorzugt 1µm bis 50µm, und in einer Länge von wenigen µm bis zur Millimetergröße, bevorzugt in einem Bereich von 0,1 bis 500µm, zur Verfügung stehen, wobei durch Mischung von sinterbaren Partikeln in Faserstruktur mit sinterbaren Partikeln in Kugelstruktur in Verbindung mit den suspendierten Porenbildnern sich je nach dem geforderten Einsatzzweck sehr dünne gesinterte offenporige Schichten mit definierter Porosität herstellen lassen. Es läßt sich auf diese Weise die Permeabilität der Schicht erhöhen.

In einer weiteren Ausführungsform weist die Schicht einen gradierten Aufbau auf. Dies bedeutet, daß in einer einzelnen dünnen porösen Schicht auf einer Seite derselben kleinere Poren vorliegen als auf der dieser Seite entgegengesetzten weiteren Seite der porösen Schicht. Durch einen gradierten Aufbau kann der Strömungswiderstand der dünnporigen Schicht exakt auf die benötigten Bedürfnisse abgestellt werden. Dadurch, daß auf der Seite der Schicht mit dem kleineren Porendurchmesser die eindringenden Partikel zurückgehalten werden, das durchströmende Gas oder die durchströmende Flüssigkeit bei Durchströmen jedoch im Bereich der größeren Porendurchmesser auf der entgegengesetzten Seite der Schicht diese leichter durchströmt, weisen derartige gradierte Schichten vorteilhafterweise im Vergleich zu nichtgradierten Schichten deutlich reduzierte Strömungswiderstände auf. Bevorzugt ist ein gradierter Aufbau in einer einzigen Schichtlage. Hierdurch werden Produktionszeiten und -kosten eingespart. Darüber hinaus ergeben sich keine Ablöse- bzw. Verbindungsprobleme, beispielsweise bei Alterung, wie Undichtigkeiten.

Nach dem Sinterprozeß kann die Schicht entweder vom Träger abgenommen werden, oder sie wird zusammen mit diesem weiterverarbeitet. Insbesondere aufgrund der nach dem Sinterschritt zwischen dem Trägerkörper und der Schicht erzielbaren festen Verbindung, soweit der Trägerkörper Verbindungen mit dem sinterfähigen Pulver einzugehen vermag, wobei die Haftung noch durch Einsatz von besonders hoch sinteraktiven metallischen Komponenten um das 3- bis 8-fache verbessert werden kann, lassen sich beispielsweise Filterkerzen auf einfache Art und Weise in einem einzigen Verfahrensschritt, also ohne erst getrennt die gesinterte Schicht ohne Trägerkörper herzustellen und erst dann auf eine Filterkerze aufzubringen, herstellen.

Es besteht eine Abhängigkeit zwischen der Teilchengröße einerseits und der erzielbaren Porengröße der fertig gesinterten Schicht andererseits. Darüber hinaus ist auch die mechanische Festigkeit einer porösen gesinterten Schicht von der Teilchengröße abhängig und zwar in der Weise, daß die mechanischen Festigkeitseigenschaften größer werden, je feiner die verwendeten Pulverteilchen sind. Da der Durchflußwiderstand je nach Medium (flüssig oder gasförmig) auch von der Dicke der fertig gesinterten Schicht abhängig ist, ergibt sich somit Problem, daß poröse Schichten mit größeren Porengrößen eine geringere mechanische Festigkeit aufweisen, als eine poröse Schicht gleicher Dicke mit nur kleiner Porengröße, so daß dies bei großer Porengröße nur durch eine Erhöhung der Schichtdicke und damit einer Erhöhung des Durchflußwiderstandes ausgeglichen werden kann.

Dieses Problem kann nun mit Hilfe des erfindungsgemäßen Verfahrens dadurch gelöst werden, daß die sinterbaren Pulver zusammen mit Partikeln vorgebbarer Größe bzw. Größenverteilung als Porenbildner in der Trägerflüssigkeit suspendiert werden, die dann in wenigstens einer Schicht auf den Trägerkörper aufgebracht, getrocknet und gesintert werden. In einem weiteren Verfahrensschritt kann dann die gesinterte Schicht vom Trägerkörper abgenommen werden oder aber es kann vorgesehen sein, daß der Trägerkörper mit der gesinterten Schicht, beispielsweise durch den Sinterprozeß selbst, fest verbunden ist. Durch die Zugabe der Porenbildner ist es möglich eine definierte Porengröße zu erzielen. Da durch die in der Suspension und damit entsprechend in der aufgetragenen dünnen Schicht verteilten Partikel des sinterbaren Pulvers und die Porenbildner sich nur in Form einer Gitterstruktur berühren können, ist es möglich, über die Größe oder aber auch Größenverteilung der Porenbildner praktisch unabhängig von der Größe und Größenverteilung des sinterbaren Pulvers eine definierte Porenstruktur vorzugeben. Das bedeutet aber auch, daß Größe und Größenverteilung des sinterbaren Pulvers ausschließlich und gezielt im Hinblick auf die mechanische Festigkeit ausgewählt werden können, also sehr feinteilige Sinterpulver eingesetzt werden können, während die Porenbildner gezielt im Hinblick auf die gewünschte Porosität ausgewählt werden.

Da sowohl das sinterfähige Pulver, bevorzugt Metallpulver, als auch die Porenbildner in einer Trägerflüssigkeit suspendiert werden, gelingt es trotz unterschiedlicher Dichte der Materialien und bei entsprechender Konsistenz der Suspension für die Porenbildner auch Teilchen aus Materialien mit geringerer Dichte als den Stoffen des sinterfähigen Pulvers gleichmäßig verteilt zu suspendieren und so eine Schicht auf einen Trägerkörper auszutragen, in der als Porenbildner vorgesehene Partikel entsprechend gleichmäßig verteilt sind.

Werden als Porenbildner Materialien verwendet, die als Platzhalter dienen, müssen diese unter Hitzeeinwirkung, d. h. beim Sinterprozeß, vorzugsweise rückstandslos verdampfen und gegenüber dem Material des sinterbaren Pulvers auch bei Sintertemperaturen inert bleiben, so daß hier keine chemischen Reaktionen zwischen dem Material der Porenbildner und dem sinterfähigen Material, in der Regel einem Metall, auftreten.

Als Trägerflüssigkeit können insbesondere bei Temperaturen unter 100°C verdampfbare Lösemittel wie Ethanol, Methanol, Toluel, Trichlorethylen, Diethylether sowie niedermolekulare Aldehyde und Ketone Verwendung finden. Als Bindemittel können Wachse, Schellack, aber auch insbesondere polymere Verbindungen eingesetzt werden, wobei bevorzugt Polyalkylenoxide oder Polyglykole, insbesondere Polyethylenglykole Verwendung finden. Polyalkylenoxide und -glykole werden vorzugsweise als Polymere und/oder Copolymere mit mittleren Molekulargewichten in einem Bereich 100 bis 500.000 g/mol, bevorzugt 1.000 bis 350.000 g/mol, noch mehr bevorzugt 5.000 bis 6.500 g/mol, verwendet.

In weiterer Ausgestaltung des erfindungsgemäßen Verfahrens ist vorgesehen, daß der Anteil an Porenbildnern in der Suspension in etwa dem vorgegebenen Porenvolumen der zu erzeugenden porösen Schicht entspricht. Damit ist es möglich, beispielsweise bei einem sehr feinen und damit hoch sinteraktiven sinterbaren Pulver über volumetrische Vorgaben bei Kenntnis der Größe der Teilchen der Porenbildner eine definierte Porosität der zu erzeugenden porösen Schicht vorzugeben.

Die über die Trägerflüssigkeit einzustellende Konsistenz der Suspension richtet sich im wesentlichen danach, wie die Suspension auf den Trägerkörper aufgetragen wird. Bei einem Gießen, gegebenenfalls mit nachfolgendem Abstreichen eines Überschusses von der gegossenen Suspensionsschicht, kann die Suspension in einer dickflüssigen Konsistenz eingestellt werden. Bei einem sogenannten Foliengießen oder einem Aufsprühen muß eine dünnflüssige Konsistenz vorgegeben werden. Die Trägerflüssigkeit kann durch ein mit einem verdampfbaren Lösemittel verflüssigten Bindemittel gebildet werden. Hierdurch ist sichergestellt, daß die Grünschicht infolge der Haftung der einzelnen Pulverteilchen untereinander über das Bindemittel eine ausreichende Festigkeit aufweist.

In weiterer vorteilhafter Ausgestaltung der Erfindung wird zur Erreichung eines gradierten Ausbaus der Schicht eine Suspension verwendet, welche im Lösemittel suspendierte Porenbildner unterschiedlicher Dichte und/oder Größe umfaßt. Hierdurch stellt sich bei der Aufgabe der Suspension auf den Trägerkörper ein Gleichgewicht innerhalb der Schicht ein, gemäß welchem die leichteren Partikel des Porenbildners sich im oberen Bereich der Schicht ansammeln, wohingegen die schwereren Partikel des Porenbildners sich eher auf der dem Trägerkörper zugewandten Seite der entstehenden Schicht ansammeln. Selbstverständlich wird dieses Gleichgewicht beeinflußt durch die Korngröße des eingesetzten sinterfähigen Pulvers. Werden nun beispielsweise als Porenbildner Partikel aus einem Material mit unterschiedlicher Größe in der Suspension verwendet, so weist die fertiggesinterte Schicht einen Gradienten hinsichtlich des Porendurchmessers derselben auf. Dies ist insbesondere vorteilhaft, da dadurch der Strömungswiderstand weiter herabgesetzt werden kann.

In besonders zweckmäßiger Ausgestaltung ist vorgesehen, daß die Suspension in mehreren dünnen Teilschichten nacheinander auf den Trägerkörper aufgebracht wird. Hierbei können die einzelnen Teilschichten jeweils aus einer identischen Suspension aufgebaut werden. Es ist möglich, für die einzelnen Teilschichten jeweils Suspensionen mit unterschiedlichen Größenverteilungen für das verwendete Pulver und/oder unterschiedliche Teilchengeometrien und/oder unterschiedliche Pulver zu verwenden. Dies erlaubt es beispielsweise, einerseits Pulver zu verwenden, die der fertiggesinterten Schicht eine besonders gute Porosität geben, andererseits ist es auch möglich, wenigstens eine Schicht herzustellen, die in ihrer Zusammensetzung für den Anwendungszweck besonders günstige, beispielsweise katalytische Eigenschaften aufweist.

Zweckmäßig ist es, wenn die jeweils aufgebrachte Teilschicht vor dem Aufbringen der nächsten Teilschicht zumindest angetrocknet wird. Hierdurch ist sichergestellt, daß die zunächst aufgebrachte Teilschicht genügend verfestigt ist, so daß sie durch das Aufbringverfahren, beispielsweise durch ein Aufsprühen der nächsten Teilschicht, nicht deformiert wird. Andererseits ist durch den verbleibenden Lösemittelanteil in der zuvor aufgetragenen, angetrockneten Teilschicht sichergestellt, daß auch die nächstfolgende Teilschicht zuverlässig und mit gleicher Packungsdichte angebunden wird und die fertige Grünschicht die gewünschte Festigkeit aufweist.

In einer anderen Ausgestaltung der Erfindung ist vorgesehen, daß die jeweilige Teilschicht vor dem Aufbringen der nächsten Teilschicht gesintert wird. Dieses Verfahren ist insbesondere dann vorteilhaft, wenn bei einem mehrschichtigen Aufbau Pulver aus unterschiedlichen gesinterten Materialien eingesetzt werden, die beispielsweise stark divergierende Sintertemperaturen benötigen. Dadurch ist es möglich, daß zunächst die Teilschicht auf dem Trägerkörper aufgebracht wird, die das Pulver mit der höchsten Sintertemperatur enthält, und nach dem Sintern der ersten Schicht in entsprechender Reihenfolge die nächstfolgenden Teilschichten mit den jeweiligen niedrigeren Sintertemperaturen aufgebracht und gesintert werden können. Dies hat den Vorteil, daß durch die einzelnen Sinterschritte die gewünschte Porosität der einzelnen Teilschichten erhalten bleibt, die verloren ginge, wenn man die Suspension mit einer derartig heterogenen Pulvermischung in einer Schicht auftragen und in einem Schritt sintern würde. Hierbei würden aufgrund der notwendigen hohen Sintertemperaturen für nur einen Anteil im Pulvergemisch die übrigen, niedrig sinternden Pulveranteile dichtsintern, so daß die Porosität weitgehend verloren ginge.

Sofern der Trägerkörper zugleich auch Bestandteil des Fertigteils ist und dementsprechend die poröse Schicht fest mit diesem verbunden sein soll, ist in einer anderen Ausgestaltung vorgesehen, daß die Suspension auf wenigstens eine der Wandungen eines Trägerkörpers aus sinterfähigem Material aufgebracht, getrocknet und die Grünschicht anschließend auf den Trägerkörper fest aufgesintert wird. Der Trägerkörper kann hierbei seinerseits ein Sinterformteil, auch ein poröses Sinterformteil mit gröberer Porenstruktur sein. Die Suspension kann wiederum durch Dünnschichtgießen, Sprühen oder Tauchen auf die Oberfläche des Trägerkörpers aufgebracht werden. Die Schicht kann je nach Verwendungszweck auf der Außenwandung und/oder der Innenwandung aufgebracht werden.

Wird der Trägerkörper durch einen rohrförmigen Trägerkörper gebildet, dann ist in Ausgestaltung des erfindungsgemäßen Verfahrens vorgesehen, daß beim Auftragen der Suspension und zumindest während eines Teils der Trockenzeit der Trägerkörper um die Rohrachse gedreht wird. Hierdurch ist gewährleistet, daß die Schichtdicke bis zur Verfestigung der Suspension als Grünschicht auf dem Trägerkörper erhalten bleibt. Hierbei ist es zweckmäßig, insbesondere beim Dünnschichtgießen und beim Sprühen, daß der Suspensionsaustritt zusätzlich zur Rotation gegenüber der Oberfläche definiert bewegt wird.

Als Folien oder als Membran oder auf einen porösen Trägerkörper aufgebrachte poröse Schichten eignen sich insbesondere zur Verwendung als Filtermaterial und bei entsprechender Einstellung der Porosität der porösen Schicht auch als Mikrofilter. Bei undurchlässigen Trägerkörpern kann ein derartiges Bauteil bei entsprechender Zusammensetzung hinsichtlich der verwendeten Pulver und bei entsprechender Porosität auch als Katalysator oder als Membranreaktor, beispielsweise mit Palladium versetzt bzw. beschichtet, eingesetzt werden. Es ist weiterhin auch möglich, die Schicht auch als Friktionswerkstoff zu verwenden, beispielsweise auf Eisenbasis. Eine mögliche Verwendung hierfür wäre die Aufbringung auf eine Reibefläche eines Synchronkörpers für Getriebe.

Die poröse Schicht findet weiterhin Verwendung in Filterrohren und Filterkerzen, die eine Länge von 10 mm bis 1.500 mm aufweisen können. Auch ist es möglich, hiermit Filterkerzen herzustellen, die eine poröse Beschichtung auf der Stirnseite aufweisen. Weiterhin können Filterkerzen hergestellt werden mit einem angesinterten Flansch, die keine Schweißnaht aufweisen.

Mit Hilfe des erfindungsgemäßen Verfahrens ist es möglich, für Filter die Durchströmbarkeit bei Reduzierung der filteraktiven Schicht je nach Porosität zu verbessern. Durch die Reduzierung der Dicke der filteraktiven Schicht konnte der Druckverlust bei konstanter Durchströmbarkeit deutlich gesenkt werden.

Mit dünnen porösen Schichten, hergestellt entsprechend der Erfindung, ergeben sich für Gase, beispielsweise Luft, bei einem Differenzdruck von beispielsweise 100 mbar von 1 bis 1500 m³/hm². Für Flüssigkeiten, beispielsweise Wasser, ergeben sich bei einem Differenzdruck von beispielsweise 100 mbar Durchflußraten von 0,1 bis 30 m³/hm². Der Permeabilitätskoeffizient beträgt etwa 0,002 x 10⁻¹² bis 3 x 10⁻¹² m² bei einer Schichtdicke von 50 bis 500 µm, gemessen nach DIN ISO 4022.

Es wurde eine dünne poröse Schicht hergestellt mit einer Dikke von 15µm. Die Trägerflüssigkeit wurde hergestellt aus Isopropanol, in welchem 1 Gew.-%, bezogen auf die Menge des eingesetzten Pulvers, eines Polyethylenglykols mit einem mittlerem Molekulargewicht von 6.000 g/mol gelöst wurde. Als Pulver wurde ein Inconel-Metallpulver verwendet, welches einen mittleren Durchmesser von etwa 1µm aufwies. Als Porenbildner wurde Harnstoff verwendet, der einen mittleren Durchmesser von etwa 2µm aufwies. Die vorstehenden Komponenten wurden 3h in einem Mischer gemischt und anschließend auf eine Kunststoffolie gespritzt. Dabei betrug das Verhältnis des Pulvers zum Porenbildner etwa 1:1, ebenso dasjenige von Pulver zu Trägerflüssigkeit. Die Mischung wurde bei Raumtemperatur für 24h getrocknet und anschließend von der Kunststoffolie abgezogen und für 10h bei bis zu 950°C im Sinterofen gesintert.

Die dabei erhaltene dünne offenporige Folie wies eine Zugfestigkeit von 284 N/mm² auf. Es wies eine sehr gleichmäßige Porenstruktur auf, wobei die Poren einen mittleren Durchmesser von etwa 2µm aufwiesen. Die Porosität betrug etwa 50%.

## Patentansprüche

1. Verfahren zur Herstellung einer dünnen porösen Schicht mit offener Porosität, hergestellt aus einem Gemisch umfassend ein sinterfähiges Pulver mit einer vorgebbaren Größenverteilung der Pulverpartikel, wobei die gesinterte Schicht eine Dicke, die mindestens etwa dem dreifachen mittleren Durchmesser der eingesetzten Pulverpartikel entspricht, einen definierten Porendurchmesser in einem Bereich von 0,01 bis 50 µm und eine Zugfestigkeit in einem Bereich von 5 bis 500 N/mm² aufweist, wobei das sinterfähige Pulver mit einer vorgegebenen Größenverteilung der Pulverpartikel zusammen mit Partikeln vorgegebener Größe als Porenbildner in einer Trägerflüssigkeit suspendiert wird, die in wenigstens einer Schicht auf einen Trägerkörper aufgebracht, getrocknet und die so gebildete Grünschicht gesintert wird.

2. Verfahren nach Anspruch 1, **dadurch gekennzeichnet, daß** der Anteil an Porenbildnern in der Suspension in etwa dem vorgegebenen Porenvolumen der zu erzeugenden Metallschicht entspricht.

3. Verfahren nach Anspruch 1 oder 2, **dadurch gekennzeichnet, daß** die Trägerflüssigkeit durch ein mit einem Lösemittel verflüssigtes Bindemittel gebildet wird.

4. Verfahren nach einem der Ansprüche 1 bis 3, **dadurch gekennzeichnet, daß** zur Erreichung eines gradierten Aufbaus der Schicht Porenbildner unterschiedlicher Dichte und/oder Größe im Lösemittel suspendiert werden.

5. Verfahren nach einem der Ansprüche 1 bis 4, **dadurch gekennzeichnet, daß** die Suspension in mehreren Teilschichten nacheinander auf den Trägerkörper aufgebracht wird.

6. Verfahren nach Anspruch 5, **dadurch gekennzeichnet, daß** die jeweilige Teilschicht vor dem Aufbringen der nächsten Teilschicht zumindest angetrocknet wird.

7. Verfahren nach einem der Ansprüche 5 bis 6, **dadurch gekennzeichnet, daß** die jeweilige Teilschicht vor dem Aufbringen der nächsten Teilschicht gesintert wird.

8. Verfahren nach einem der Ansprüche 1 bis 7, **dadurch gekennzeichnet, daß** die Suspension durch Dünnschichtgießen, Sprühen oder Tauchen auf den Trägerkörper aufgebracht wird.

9. Verfahren nach einem der Ansprüche 1 bis 8, **dadurch gekennzeichnet, daß** die Suspension auf wenigstens eine der Wandungen eines porösen, vorzugsweise rohrförmigen Trägerkörpers aus sinterfähigem Material aufgebracht, getrocknet und die so gebildete Grünschicht anschließend auf den Trägerkörper fest aufgesintert wird.

10. Verfahren nach Anspruch 9, **dadurch gekennzeichnet, daß** der rohrförmige Trägerkörper beim Auftragen der Suspension und zumindest während eines Teils der Trocknungszeit um die Rohrachse gedreht wird.

## Claims

1. Method of producing a thin porous layer with open porosity, produced from a mixture comprising a sinterable powder with a predeterminable powder particle size distribution, whereby the sintered layer is of a thickness which corresponds to at least about three times the average diameter of the powder particles used and has a defined pore diameter in a range from 0,01 to 50 µm and a tensile strength in a range from 5 to 500 N/mm², whereby the sinterable powder is suspended in a carrier fluid with a predetermined size distribution of said powder particles together with particles of predetermined size as pore forming material within a carrier fluid, which is applied to a supporting body in at least one thin layer and dried, and the green layer thus formed is sintered.

2. Process according to claim 1, **characterised in that** the proportion of said pore forming material within the suspension corresponds to approximately the predetermined pore volume of the metal layer to be produced.

3. Process according to claim 1 or 2, **characterised in that** the carrier fluid comprises a binding agent liquefied in a solvent.

4. Process according to one of the claims 1 to 3, **characterised in that** pore forming material of different densities and/or sizes are suspended in said solvent in order to obtain a graded structure of the layer.

5. Process according to one of the claims 1 to 4, **characterised in that** said suspension is applied to said supporting body in several partial layers one after the other.

6. Process according to claim 5, **characterised in that** each partial layer is dried at least in part before the next partial layer is applied.

7. Process according to one of the claims 5 to 6, **characterised in that** each partial layer is sintered before the next partial layer is applied.

8. Process according to one of the claims 1 to 7, **characterised in that** said suspension is applied to said supporting body by thin layer pouring, spraying or immersing.

9. Process according to one of the claims 1 to 8, **characterised in that** said suspension is applied to at least one of the walls of a porous, preferably pipe-shaped supporting body made from sinterable material, dried and said green layer thus formed subsequently sintered firmly onto said supporting body.

10. Process according to claim 9, **characterised in that** upon applying said suspension and at least during some part of the drying period, the pipe-shaped supporting body rotates around the axis of the pipe.

## Revendications

1. Procédé de fabrication d'une couche fine et poreuse à porosité ouverte, fabriquée à partir d'un mélange comprenant une poudre pouvant être frittée, ayant une répartition dimensionnelle des particules de poudre pouvant être prédéterminée, la couche frittée présentant une épaisseur qui correspond au moins à environ trois fois le diamètre moyen des particules de poudre utilisées, un diamètre de pores défini dans une gamme de 0,01 à 50 µm et une résistance à la traction dans une gamme de 5 à 500 N/mm², dans lequel la poudre pouvant être frittée, ayant une répartition dimensionnelle des particules de poudre prédéterminée, est mise en suspension avec des particules de dimension prédéterminée en tant qu'agent porogène dans un liquide support, qui est appliqué en au moins une couche sur un corps support, séché et la couche d'ébauche ainsi formée est frittée.

2. Procédé selon la revendication 1, **caractérisé en ce que** la proportion d'agents porogènes dans la suspension correspond approximativement au volume prédéterminé de pores de la couche métallique à produire.

3. Procédé selon la revendication 1 ou 2, **caractérisé en ce que** le liquide support est formé par un liant liquéfié par un solvant.

4. Procédé selon l'une quelconque des revendications 1 à 3, **caractérisé en ce que**, pour obtenir une structure graduelle de la couche, des agents porogènes de densités et/ou dimensions différentes sont mis en suspension dans le solvant.

5. Procédé selon l'une quelconque des revendications 1 à 4, **caractérisé en ce que** la suspension est appliquée en plusieurs couches partielles les unes après les autres sur le corps support.

6. Procédé selon la revendication 5, **caractérisé en ce que** chaque couche partielle est au moins séchée avant l'application de la couche partielle suivante.

7. Procédé selon l'une quelconque des revendications 5 à 6, **caractérisé en ce que** chaque couche partielle est frittée avant l'application de la couche partielle suivante.

8. Procédé selon l'une quelconque des revendications 1 à 7, **caractérisé en ce que** la suspension est appliquée sur le corps support par couchage en couche fine, pulvérisation ou immersion.

9. Procédé selon l'une quelconque des revendications 1 à 8, **caractérisé en ce que** la suspension est appliquée sur au moins une des parois d'un corps support poreux, de préférence tubulaire, constitué de matière pouvant être frittée, est séchée et que la couche d'ébauche ainsi formée est ensuite solidement frittée sur le corps support.

10. Procédé selon la revendication 9, **caractérisé en ce que**, lors de l'application de la suspension ou au moins pendant une partie du temps de séchage, le corps support tubulaire est tourné autour de l'axe du tube.
